# EUROPEAN PATENT SPECIFICATION

(11) **EP 1 838 114 B1**
(45) Date of publication and mention of the grant of the patent: **24.03.2010**
(21) Application number: 07112040.6
(22) Date of filing: 29.03.2001
(51) Int. Cl.: H04W 8/18, H04W 8/14, H04W 88/06

(54) **Architecture and packet routing in a multi-bearer-type network**
Architektur und Paketweglenkung in einem Netzwerk des Mehrträgertyps
Architecture et acheminement de paquets dans un réseau de type à porteuses multiples

(30) Priority: 31.03.2000 FI 20000752
(43) Date of publication of application: 26.09.2007
(62) Divisional of application: 01921412.1
(73) Proprietor: Nokia Siemens Networks Oy, 02610 Espoo (FI)
(72) Inventor: Paila, Toni, Stamford, CT 06902 (US); Xu, Lin, 33880, Lempäälä (FI)
(74) Representative: Borgström, Markus

(56) References cited:
- WO-A-00/18154
- WO-A-00/18155
- WO-A-00/45560
- WO-A-01/72076
- WO-A-98/37724
- WO-A-98/43446
- PERKINS C E: "MOBILE NETWORKING THROUGH MOBILE IP" IEEE INTERNET COMPUTING, IEEE SERVICE CENTER, NEW YORK, NY, US, vol. 2, no. 1, January 1998 (1998-01), pages 1-12, XP002901802 ISSN: 1089-7801

## Description

### Background of the invention

The invention relates to traffic management in a multi-bearer packet data network. A multi-bearer network, or an MBN, is a network having the capability to carry a data packet via one of several alternative bearers. To be more precise, the term "multi-bearer network" should be interpreted as meaning "multi-bearer-type network", or in other words, a network arrangement which provides multiple different bearer types for data packet delivery. An example of an MBN is a concept known as MEMO (Multimedia Environment for Mobiles), see reference 1. Additionally, the MBN supports mobility of a subscriber terminal. An example of terminal mobility is IP (Internet Protocol) mobility, which is the topic of standard RFC2002 and an Internet Draft "Mobility Support in IPv6", by C. Perkins and D. Johnson, dated 28 October 1999 by the Internet Engineering Task Force (IETF). The network layer protocol to be used in the invention, IPv6, is described in documents RFC-2460: "Internet Protocol, Version 6 (IPv6) Specification*"* and RFC-2373: "IP Version 6 Addressing Architecture*"*. The status of these Internet drafts is "work in progress". A generic problem underlying the invention is that the MEMO concept is very limited. It only contemplates one uplink bearer type, namely GSM (Global System for Mobile Communication), and one downlink bearer type, namely DAB (Digital Audio Broadcast). Within the context of this application, 'uplink' means from the mobile node MN to the correspondent node CN and 'downlink' means the inverse direction.

WO-A-99 31846 discloses a method for routing data to a mobile node, the method comprising maintaining reachability information on a mobile node, and setting a destination to which received data is to be sent if the mobile node is unreachable.

WO-A-99 31853 discloses a method for routing data to a mobile node, the method comprising determining locations of agent nodes, and transmitting successive data units from a stream of data units intended for the mobile node to different ones of the agent nodes.

Chiruvolu G. et al.: "Mobility and QoS support for IPv6-based real-time wireless internet traffic", IEEE international conference on communications (cat. No. 99CH36311), vol. 1, 6.-10.6.1999, Vancouver, BC, Canada (D3), relates to a method of dynamic bandwidth reservation in mobile IP. It is advantageous to keep the volume of signalling messages as low as possible, and this is achieved through a proxy known as care-taker (CT) keeping the mobile node informed of changes in the path messages of the on-going sessions.

WO-A-00 45560 describes a public mobile access data network in which a home agent/foreign agent model is used where the home and foreign agents transfer data packets over the network via a tunnel. The home network addresses serve as IP addresses that are dynamically re-allocated to label-switched paths as the mobile node moves from one foreign agent to another.

EP-A-1 047 244 discloses a method for configuring a QoS session between a mobile node and a correspondent node. In the method, a source address of IP packets from the mobile node is modified to identify the mobile node's address in a foreign network. The source address of the IP packets may be modified in the foreign network. The source address may be further modified in the correspondent network to the mobile node's home address.

WO 98/37724 describes a system for enabling network convergence and inter-working between multiple communications networks. The Internet protocol implements mobility through home agents, care of address, and visiting agents concepts to route IP packets to the appropriate subscriber location, wherein there also exists a separate procedure for updating routing tables.

Perkins C. E.: "Mobile networking through mobile IP", IEEE internet computing, IEEE service center, New York, vol. 2, no. 1, Jan 1998 (1008-01), p. 1-12, ISSN: 1089-7801) discloses a method in which the home agents use agent advertisements to list one or more available care of addresses. If advertisements are no longer detectable from a foreign agent the mobile node should begin to hunt for a new care of address.

WO 98/43446 discloses a roaming mechanism an Internet protocol tunnel is established between the home agent and the foreign agent enabling the home agent to directly deliver incoming packet data to the serving foreign agent.

WO 00/18154 relates to a mechanism for providing IP mobility in a packet radio network. In routing optimisation, correspondent nodes and previous foreign agents may retain an up to date binding for the mobile node. As a result, the correspondent nodes may tunnel their datagrams directly to the mobile node's care of address and the previous foreign agents may forward datagrams directly to the mobile node's current care of address.

WO 00/18155 discloses an arrangement for providing IP mobility for a mobile station. A mobile node may have several care of addresses at the same time. The list of care of addresses is updated when the mobile node receives advertisements from foreign agents.

WO 01/72076 discloses a multi-bearer administration system MBAS for supporting the mobility of mobile nodes in a system connected to several cellular bearer networks including unidirectional networks. In the registration request, the IP address of MBAS3 is provided as the mobile node's care of address. MBAS1 (the home MBAS) performs a binding update. After the binding update, MBAS3 acts as the mobile node's visited MBAS. From this point on, the mobility management unit of MBAS3 is responsible for handling the mobile node.

Expanding the MEMO concept to multiple alternative uplink and/or downlink bearer types causes more specific problems. One of the specific problems is how to select an optimal bearer for each data packet in varying situations in an MBN. Data packets have different quality-of-service requirements. Situations may vary because the subscriber moves or the network load changes. Another specific problem is how to route the traffic to the mobile node via the selected bearer and to design suitable network elements and MBN architecture.

### Disclosure of the invention

The object of the invention is to provide equipment for solving the specific problem related to bearer selection in an MBN.

This object is achieved with equipment characterized by what is defined in the attached independent claims. Preferred embodiments of the invention are defined in the attached dependent claims.

According to the invention, resource availability information concerning a downlink bearer network and subscriber preference information concerning a mobile node are received and maintained in a service support node set. The service support node set also maintains traffic policy information concerning a multi-bearer network. In a centralized traffic policy controller, a routing table is generated on the basis of the subscriber preference information, the traffic policy information and the resource availability data, and the routing table is used for routing one or a few initial data packets of a new session from the correspondent node to the mobile node. A binding update is performed between the mobile node and the correspondent node, and an address associated with the centralized traffic policy controller is stored as the mobile node's care-of address in its home agent. An initial data packet is routed via the home agent and the centralized traffic policy controller to a bearer network interface unit serving the mobile node. In response to the routing, an address of the bearer network interface unit is stored as the mobile node's care-of address in the correspondent node. In response to the binding update, subsequent data packets are routed directly from the correspondent node to the bearer network interface unit such that the subsequent data packets bypass the home agent and the centralized traffic policy controller.

The invention is based on a novel distribution of functions within an MBN. The functions are distributed over four major nodes or node sets. In addition, the MBN comprises a physical or virtual backbone network. A first node set, called access control nodes, grants or rejects user rights within the MBN. This set also stores subscriber preference information.

A second node set, called home administration nodes, comprises a home registration unit (HRU) for storing subscriber registration and preference information, such as access right information. For instance, a subscriber may be a national subscriber and not pay for any roaming support. Another user may elect roaming support in major European cities. The available options depend entirely on the service providers. The HAN node set also comprises an MBN home agent (MHA), which is a special version of a home agent. It supports a mobile node that uses an MBN-specified IP address as its home addresses. Each MN subscriber which is registered for MBN service has an entry in the HRU of the home network. An MBN serves its subscribers regardless of which IP address is used as the mobile node's home address for communicating with the correspondent node.

A key concept in the mobile-IP protocol is the home agent (HA). For each mobile node, there is one home agent. The home agent is a routing entity in a mobile node's home network which tunnels packets for delivery to the mobile node when it is away from its home network, and maintains current location information for the mobile node. The home agent per se is known to the skilled reader. But the invention is also partially based on the idea that the home agent function is supplemented with a home register unit (HRU) which is a separate entity from the home agent. Separating the home register unit from the home agent allows more freedom in positioning the home agent. In other words, the home agent can be located virtually in any network, and the mobile node can use its own IP address instead of the one provided by the MBN. Thus a mobile node is allowed to use either an IP address provided by the MBN or an IP address provided by some other network. If the mobile node uses an MBN-provided IP address as its home address for communicating with its correspondent node, the MHA acts as the mobile node's home agent. If the MN uses an IP address provided by eg a corporate network, the home agent in that network is the mobile node's home agent.

A third node set, called service support nodes (SSN), is in charge of centralized traffic policy control, mobility management and resource reservation decisions. The SSN node set also controls starts of sessions and routes the first packet(s) of new sessions. Normally the SSN node set does not route subsequent packets of ongoing sessions. Instead, the mobile node updates its mobility binding with its correspondent node, after which the traffic bypasses the SSN nodes. For some reason, a mobile node may not want to send a mobility binding update message. In this case, the SSN nodes route all traffic to the mobile node.

The service support nodes (SSN) comprise a traffic policy controller (TPC) within the backbone network. Later in this application, the traffic policy controller is frequently shortened to "traffic controller". The traffic (policy) controller makes centralized routing policy decisions but does not route all packets itself. It only routes the first packet or the first few packets of a new session and helps other network elements to communicate directly with each other. The SSN nodes also comprise a resource coordination unit (RCU) from which the TPC checks resource availability before making decisions about traffic allocation. The traffic controller also requests the resource coordination unit to reserve resources for a flow when necessary (for guaranteed service). Moreover, the traffic controller selects a downlink bearer on the basis of traffic flow or/and traffic class. The SSN node set also comprises a mobility management unit (MMU) which supports the mobile node in handovers within a TPC area and between two TPC areas.

The TPC, RCU and MMU are preferably closely coupled or within the same network element. This means that the mobile node is not burdened with addressing these functions separately. Instead, these functions share a common IP address, and the MN communicates with the TPC which distributes MN-originated information with the RCU and the MMU.

Each traffic policy controller (TPC) has an area of responsibility. Such an area will be called a TPC area. The TPC area comprises the cells broadcasting the TPC's IP address or other unique TPC identifier. Because the cell size varies and the cells are partially overlapping, the TPC area has no clearly-defined geographical border, and a mobile node may be located geographically in two or more neighbouring TPC areas simultaneously. However, the mobile node can be registered with (ie reachable via) one TPC at any time. In such a situation, the mobile node selects the TPC controlling the cell with the best signal quality. Moreover, the area of a certain TPC is likely to be different between the various bearer networks. In other words, the TPC area for DVB is different from the TPC area for DAB.

A fourth node set, called interface units (IU), acts as interfaces to the various bearer networks. The primary function of the interface units is to encapsulate IP packets into protocols suitable for the bearer network in question, and to control incoming traffic to a bearer network or a broadcast cell. The interface unit of a broadcast cell also monitors and controls the resource usage and reports resource availability to the SSN nodes.

Each interface unit (IU) toward the broadcast bearer networks comprises or is closely coupled to a resource management unit (RMU). The RMU controls the physical resource allocation in each cell under it. It also acts as a peer entity of the resource coordination unit to respond to resource allocation requests. More specifically, the RCU makes decisions concerning resource allocation but the RMU maps each data flow to one or more physical or logical channels of the specific broadcast station.

The bearers include a first set of bidirectional bearers. Examples of bidirectional bearers are circuit-switched mobile networks, such as GSM (Global System for Mobile communications), and packet-switched mobile networks, such as GPRS (General Packet Radio Service), and third generation mobile networks, such as UMTS (Universal Mobile Telecommunications System), which offer both circuit-switched and packet-switched bearers. The bearers also include a second set of unidirectional bearers. Examples of unidirectional bearers are digital audio broadcast (DAB) and digital video broadcast (DVB). The set of unidirectional bearers can also be called broadcast bearers, and the set of bidirectional bearers can also be called non-broadcast bearers.

A multi-bearer network according to the invention comprises a backbone network which is preferably based on IPv6 (Internet Protocol version 6) with mobility support. The backbone network has border gateway nodes towards the Internet and interface units (IU) towards the various bearer networks.

The invention provides mobility support in an MBN in an elegant manner. There is a first set of centralized access control nodes, a second set of centralized traffic (policy) control nodes and a third set of interface nodes for each bearer network. The mobile node and its correspondent node are not burdened with addressing each node or functionality separately. To access services within the MBN, the mobile node is only required to have some rights in one bidirectional (uplink) bearer network.

### Brief description of the drawings

The invention will be described in more detail by means of preferred embodiments with reference to the appended drawing wherein:
Figure 1 is a block diagram illustrating an overall network architecture;
Figure 2 illustrates addressing within the MBN;
Figure 3 shows a traffic handling policy table THPT;
Figure 4 shows a mapping table QMTC for mapping QoS (Quality of Service) in a packet's IP header into a traffic class within the MBN;
Figure 5 shows a list ACAL of the mobile node's available care-of address;
Figure 6 is a signalling diagram illustrating registration and resource reservation;
Figure 7 is a signalling diagram illustrating the start of a session;
Figure 8 illustrates a microcell architecture for DxB networks; and
Figure 9 illustrates the various data structures used in the system shown in Figure 8.

### Detailed description of the invention

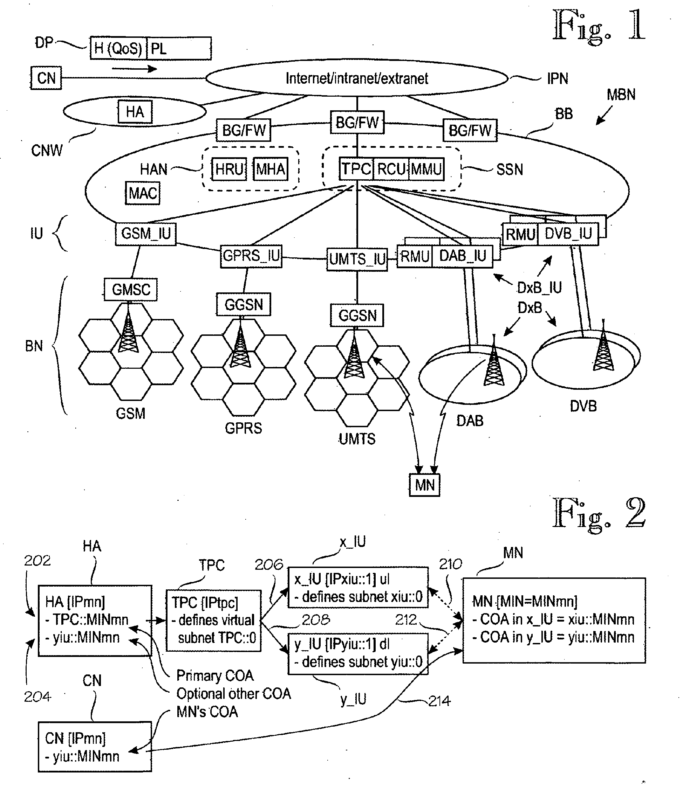

Figure 1 is a block diagram illustrating an overall network architecture. Reference sign MN denotes the mobile node. Reference sign CN denotes the mobile node's correspondent node, which is a host or server the mobile node is communicating with. The mobile node MN communicates with its correspondent node CN via a multi-bearer network MBN which offers several alternative bearers for a data packet DP. The MBN comprises a physical or virtual backbone network (BB). The mobile node MN is able to communicate with several bearer networks BN. The bearer networks comprise at least one bidirectional bearer network (in this example: GSM, GPRS or UMTS) and at least one unidirectional or broadcast bearer network (in this example: DAB and DVB). The DAB and DVB are commonly referred to as DxB. The DxB networks are the principal bearers for downlink traffic. The mobile node uses the bidirectional (uplink) bearers primarily for accessing the services of the MBN, although some bidirectional bearers, most notably the UMTS, can be used for downlink traffic with a moderately high speed. For clarity, the bearer networks are shown as distinct in Figure 1, but in reality they are geographically overlapping, and a mobile node may have access to all bearer networks at the same time. The bearer networks BN per se are known to the skilled reader, and especially the bidirectional bearer networks can be largely treated as black boxes.

Each data packet DP comprises a header H and a payload part PL. To be precise, a data packet typically has several headers inside each other, because each protocol layer inserts its own header. However, each protocol layer only handles its own header, and a model with only one network layer header is usually sufficient for describing the invention. The header indicates, directly or indirectly, a quality-of-service requirement QoS for the data packet. An example of a direct QoS indication is a case where a data packet header includes a parameter which is or which can be directly mapped to a quality-of-service requirement parameter. An example of an indirect QoS indication is a case where a (Transmission Control Protocol) data packet header indicates a port number which in turn indicates the QoS requirement. It should be understood that 'quality of service' is a very generic term indicating certain requested or negotiated transmission characteristics, such as bit rate, maximum delay and/or packet loss probability. Depending on the actual protocol used, quality of service is indicated by or mapped to one (or more) of the existing appropriate fields, such as the Traffic Class field of IPv6. The term 'traffic class' is used to refer collectively to the fields which are used to indicate the quality-of-service requirement.

In the arrangement shown in Figure 1, the MBN communicates with the CN via an IP Network IPN, such as the Internet or an intranet/extranet. A border gateway node BG interfaces the MBN to the IP network IPN. The border gateway BG is typically a simple (but sufficiently powerful) router which preferably includes a firewall function FW. A backbone network BB combines the different bearer networks BN. The backbone network may be the MBN operator's internal network. A physical example of a backbone network is a highspeed local-area network or a wide-area network. The backbone network BB is based on IPv6 (Internet Protocol version 6) or a later version, with mobility support.

In a system as shown in Figure 1, the access control node set is implemented as an MBN authentication centre MAC, which provides centralized grant or denial of the mobile node's rights to services via the backbone network BB. The MAC also stores subscriber preference information related to the mobile node.

A second node or node set, called HAN (home administration nodes), supplements the mobile IP home agent function. The HAN nodes comprise a home registration unit (HRU) for storing subscriber registration and preference information, such as access right information. The HAN nodes also comprise an MBN home agent (MHA), which is a special version of the home agent. Separating the home register unit from the home agent allows more freedom in positioning the home agent. The home agent can be located virtually in any network, and the mobile node can use its own IP address instead of the one provided by the MBN. Accordingly, in the example shown in Figure 1 the home agent HA of the mobile node MN is in the MN's corporate network CNW.

The home agent HA is a key concept in the mobile-IP protocol. For each mobile node, there is one home agent. The home agent is a routing entity in a mobile node's home network which tunnels packets for delivery to the mobile node when it is away from its home network, and maintains current location information for the mobile node. It tunnels datagrams for delivery to, and detunnels datagrams from, a mobile node when the mobile node is away from its home network.

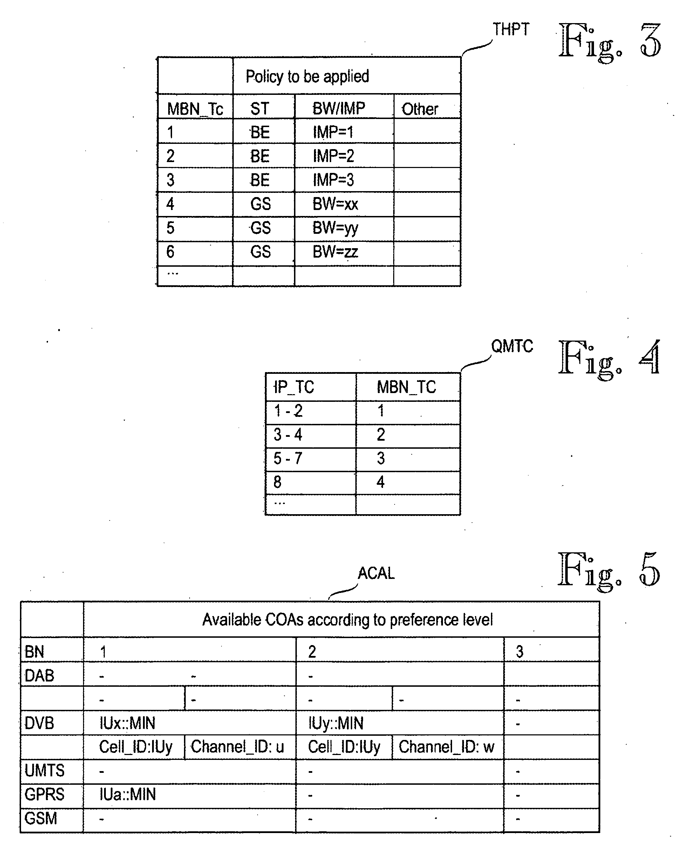

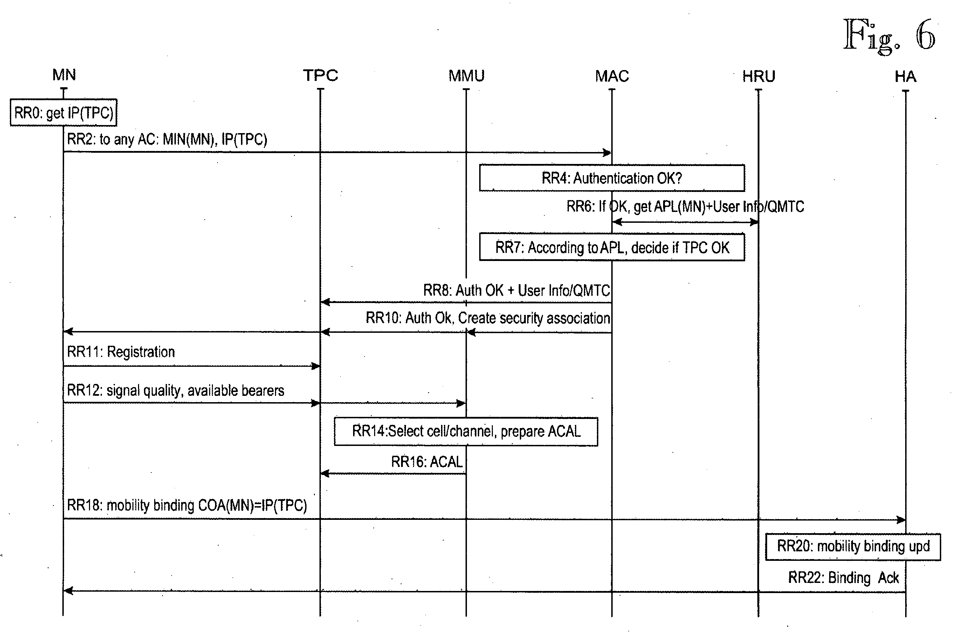

The home register unit HRU stores the user registration information, such as an Access Permission List (APL, see Figure 6) which indicates the MN's rights in each BN. The HRU also stores the subscriber's preference information, which indicates what quality of service the subscriber requires from various applications (or for specific incoming traffic classes). An example of such preference information is the QMTC table shown in Figure 4. The HRU of a visiting MN may be located in a different MBN. In such a case, the HRU of the visited MBN may consult the HRU of the MN's home MBN. If the traffic handling policy of the MN's home network differs from the policy of the visited network, the HRU should adapt the preference information accordingly, such that the user receives the expected quality of service.

A third node set, called SSN (service support nodes), provides centralized administration and distribution of traffic policies (see Figures 3 and 4). The SSN node set combines the MN-specific subscriber preference information and operator-specific policy information into an MN-specific traffic handling policy which the SSN node set used to make decisions concerning cell and/or channel selection. The MN-specific traffic handling policy is also distributed to the interface nodes which route the packets of ongoing sessions. It may route the first data packet(s) of new sessions but does not route subsequent data packets of ongoing sessions if the MN sends its updated mobility binding information to the CN. The traffic control node set also supports centralized mobility management for managing the mobility of the mobile node within the downlink bearer networks DxB, and it makes centralized resource reservation decisions within the downlink bearer networks. In the arrangement shown in Figure 1, the SSN node set comprises a traffic (policy) controller TPC. Each traffic controller comprises or is closely coupled to a resource coordination unit RCU and a mobility management unit MMU.

A fourth node set, called interface units IU, acts as interfaces to the bearer networks BN. The IU nodes also carry out the resource reservation decisions in the downlink bearer networks DxB. In Figure 1, the interface units are labelled xx_IU, where 'xx' is the relevant bearer network. More precisely, the backbone network BB preferably has one (or more) interface unit towards each bearer network having inherent mobility support (GSM, GPRS and UMTS) and one interface unit towards each cell in a bearer network not having inherent mobility support (DxB). Each DxB interface unit comprises or is closely coupled to a resource management unit (RMU).

The mobile node MN must be able to communicate with several bearer networks BN. It implements IPv6 with mobility support. It monitors selected links (physical channels of DxB) for router advertisement messages. Thus it gains knowledge of the various routers within the MBN. The MN has a unique MIN number (MBN interface number) for automatic care-of address configuration. The MN is able to send an authentication message for registering with the backbone network BB via an interface unit IU of a bidirectional BN, the IU consequently forwarding the authentication request to the MBN authentication centre MAC. The mobile node is able to initiate a binding update procedure for registering its own location information with its home agent HA and the correspondent node CN.

The mobile node is also able to edit its mapping from IP Quality of Service (QoS) to MBN Traffic Class (MBN_TC, see Figure 4). An example of a QoS-to-MBN traffic class mapping is as follows. When users enter or update their subscriptions, they can select their QoS and MBN_TC mappings. The MBN operator can provide several mapping tables, each of which corresponds to a different price or tariff. The user selects one mapping table. Later on, the user may modify the mapping table (by calling the operator), access and modify its profile (eg via a web/wap browser or by using special software). Once the mapping is changed, the charging method will be changed accordingly. The traffic controller TPC uses such mappings as a basis for determining the specific xx_IU unit via which a given kind of traffic is conveyed.

Figure 2 illustrates a general addressing concept within the MBN. IPv6 employs two types of care-of addresses (COA): a primary COA and a co-located COA. Because of the addressing structure of IPv6, there is usually no need to have separate foreign agents for mobility support (in contrast to IPv4), and the COAs are co-located COAs. A mobile node may have multiple COAs, and a single home agent may store more than one COA for one mobile node. But at any one time, only one COA is registered as the primary COA to which the home agent tunnels MN-terminated data.

The home agent HA knows the care-of address associated with the traffic controller TPC. Preferably, the mobile node's primary COA is the subnetwork prefix of the TPC plus the MN's MIN. An advantage of this addressing scheme is that the TPC is able to see the MN's address and route the data to its final destination even if the HA encrypts MN-terminated tunnelled data.

According to a preferred feature of the invention, the primary COA registered in the home agent is associated with the traffic policy controller TPC. In other words, the COA's prefix is the TPC's subnetwork prefix and the last part is the mobile node's own MIN. The TPC acts as a router for the traffic heading toward the COA. The COA stored in the CN is associated with the relevant interface unit IU. This address allocation trick forces the traffic to be routed via the TPC during the start of a session, and allows traffic routing directly via the selected IU during the remainder of the session. The MN and the CN may open a second session in parallel to the first session. The data packets of the parallel session may be routed directly to the MN via the IU if no resource reservation is needed.

In the example shown in Figure 2, the home agent HA maintains the primary COA 202 of the mobile node MN. The primary COA 202 is the IP address 202 of the traffic controller TPC used by MN. Optionally, the HA may also store the IP address 204 of the MN within the subnetwork under the downlink interface unit currently used by the MN. In this example, there are two possible downlink interface units x_IU and y_IU, of which y_IU is selected. The traffic controller TPC maintains the IP address 208 of the downlink interface unit y_IU currently used by the MN and the IP address 206 of another downlink interface unit x_IU. The downlink interface units in turn maintain the mobile node's COA (210 and 212) in each respective subnetwork.

During the start of a session, the first packet is routed by using the addresses 202, 208 and 212. As soon as the correspondent node CN registers the MN's new mobility binding, subsequent packets are routed by using the mobile node's COA 214 within the subnetwork defined by the downlink interface unit y_IU.

Figure 3 shows an example of a traffic handling policy table THPT. For each MBN Traffic Class (MBN_TC), the THPT defines the traffic handling policy to be applied. The THPT can be similar or different between different MBN networks. Column ST indicates the service type of the traffic class. In this context, "service type" is a generic term and not a name of a field in an IPv4 packet header. The possible values are "best effort" (BE) and "guaranteed service" (GS). (In a radio network, however, "guaranteed" must be read as "guaranteed if possible"). BW means bandwidth (measured by some appropriate and sufficient metrics), and IMP means importance. Low-importance data packets are discarded first if sufficient bandwidth is not available. The column marked "other" can be used for example to implement policies with time dependant validity. This means that daytime priorities can be different from night-time priorities.

Figure 4 shows an example of a mapping table QMTC for mapping QoS in a data packet's IP header into a traffic class within the MBN (QMTC = QoS to MBN_TPC). This table is subscriber-specific and maps IPv6 traffic classes IP_TPC into MBN traffic classes MBN_TPC. The traffic class in question is indicated by the packet's header.

Figure 5 shows an example of a list ACAL of the mobile node's available care-of address (ACAL = Available Care-of Address List). For each mobile node, there is a corresponding ACAL table which lists, in decreasing order of preference, alternative available care-of addresses in each available downlink bearer, cell or channel. In the example shown in Figure 5, there are two available care-of addresses for DVB (downlink) and one for GPRS (uplink). SPx is the subnetwork prefix of subnetwork x, and MIN is the MBN interface number for the mobile node. The mobile node continuously measures signal strength (or some other signal quality parameter, such as the bit error ratio) of each available broadcast channel. It sends the measurement results to the mobility management unit MMU, which maintains a list of channels having an acceptable signal quality. Then the MMU translates this list into a list of care-of addresses wherein each channel corresponds to a combination of the relevant subnetwork prefix and the mobile node's care-of address. Then the MMU arranges the ACAL list according to preference (signal quality) and sends the ACAL list to the traffic controller TPC. It is the traffic controller's responsibility to make the final decision concerning the care-of address to be used. Three example situations illustrate the decision-making process.

In a first situation, the mobile node is powered on but does not receive data from any CN. When the first packet arrives from a CN, the packet is tunnelled by the HA to the MN's COA associated with the TPC. The TPC, acting as a default router, receives the packet and makes the cell/channel decision on the basis of the ACAL list. After making the decision, it pages the MN, builds a routing path to the MN via the selected IU, and routes the packet via the IU to the MN. The TPC also informs the MMU about the decision so that the MMU can monitor the signal quality (strength) of the active cell and make appropriate handover decisions.

In a second situation, there is an ongoing session and the mobile node is moving from one place to another. This move requires the ACAL list to be changed. The MMU updates the ACAL list. If the MMU determines that a handover is necessary, it sends the TPC a request to select a new cell on the basis of the new ACAL. In this case too, the TPC informs the MMU about the decision, and the MMU assists the MN to complete the handover.

In a third situation, a resource changes. Accordingly, the MN may have to be handed over to another cell/channel. In this case, the TPC makes the decision on the basis of the ACAL and instructs the MMU to perform the rest of the handover.

Figure 6 is a signalling diagram illustrating registration and resource reservation. Each MBN has a traffic handling policy table THPT (see Figure 3). In step RR0, the MN wants to initiate a registration process. The MN is assumed to have some rights in one uplink network, which in this example is the GPRS network. The MN has no rights yet in the broadcast networks, but it monitors the broadcast links to obtain the identifier or IP address of the traffic controller TPC which controls the area in question. In step RR2, the MN sends the authentication centre MAC an authentication request comprising the MN's MIN (MBN interface number) and the IP address of the TPC (obtained in the previous step). In step RR4, the MN is authenticated by the authentication centre MAC. The authentication process is the topic of a copending patent application filed on the same day as the present application. For the purposes of the present invention, it will suffice to say that after the authentication process, the MAC knows whether the MN is allowed to access this MBN. If the authentication is completed successfully, in step RR6 the MAC consults the home registration unit HRU to get the MN's Access Permission List APL, which indicates the MN's rights in each BN. The HRU of a visiting MN may be located in a different MBN. The TPC also negotiates with the HRU to obtain the subscriber's preferences, such as the QMTC table shown in Figure 4. In step RR7, the MAC decides whether the TPC is appropriate, considering the APL list. In step RR8, the MAC informs the TPC that the authentication was successful, and reports the subscriber preference information. In step RR10, the MN receives an indication that the authentication was completed successfully. Also, the MAC establishes a security association between the MN and the SSN (the TPC, MMU and RCU). For example, a session key may be distributed to the MN and the SSN. The session key allows encrypted communication between the MN and the SSN. In a registration step RR11, the MN sends its address in the uplink and downlink bearer networks to the TPC. In step RR12, the MN reports the following information to the TPC, which passes it on to the MMU (which preferably shares the TPC's IP address): 1) signal quality of each available cell/channel in the broadcast network(s), and 2) available bidirectional bearers. In step RR14, the TPC/MMU selects the acceptable cell(s)/channel(s) in the broadcast network(s) and prepares the ACAL list (Available Care-of Address List, see Figure 5). In step RR16, the MMU gives the ACAL list to the TPC. In step RR20, the MN initiates a registration with its home agent HA by sending a mobility binding COA(MN) = COA(TPC-MN). In other words, the MN's COA within the HA is the COA associated with the TPC. In steps RR22 and RR24, the HA updates and acknowledges the MN's mobility binding. Any correspondent node CN may now reach the MN via its HA by sending a packet with the IP address of the MN.

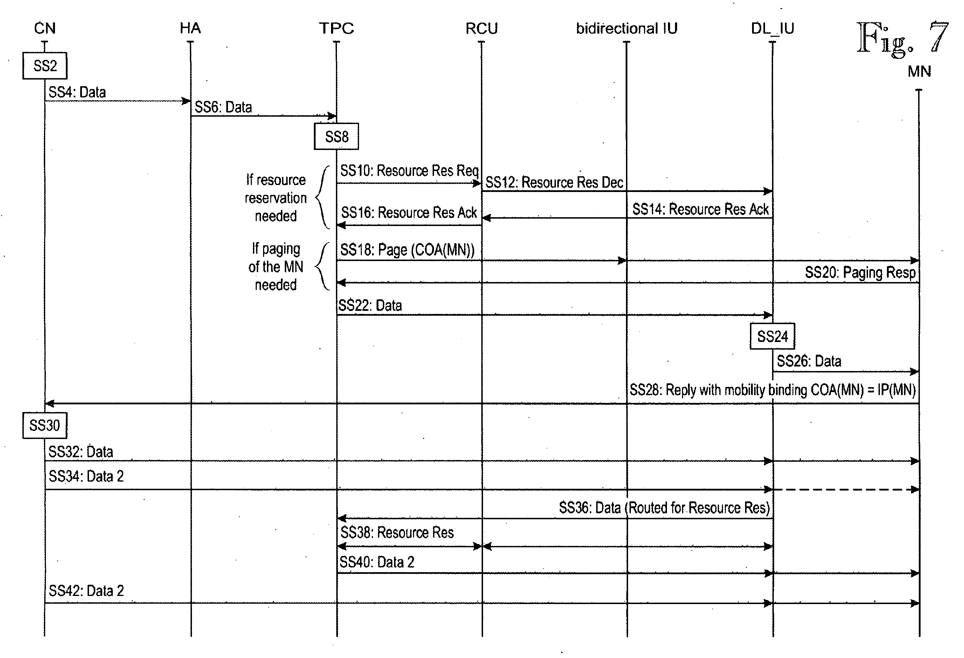

Figure 7 is a signalling diagram illustrating the start of a session. The set of events begins in step SS2 in which the MN's correspondent node CN knows the MN's IP address IP(MN). In step SS4, the CN does not know the mobility binding in the HA. Thus the first user data packet is routed to the HA. (In Figure 7, 'data' refers to data packets of session 1, and 'data 2' refers to data packets of session 2.) In step SS6, because the HA stores the TPC's IP address as the MN's primary COA, the packet is tunnelled to the TPC. In step SS8, the TPC uses the QMTC table to classify the incoming packet to its MBN traffic class. Next, the TPC uses the ACAL table (which combines the subscriber's preference, the MBN operator's traffic policies, and available traffic/resource information (resource availability data) obtained from the RCU) to select a downlink bearer.

Steps SS10 to SS16 relate to resource reservation, which the TPC performs only when necessary (for guaranteed service). Resource reservation is specific to the data flow. For example, if the data flow in question belongs to MBN traffic class 5, the TPC reserves a certain amount of bandwidth in the selected cell (under the COA indicated by the ACAL). In step SS10, the RCU preferably maintains a database (eg a fast look-up table) that indicates resource availability in all cells under the TPC, and in the neighbouring cells (for smooth handover). If the incoming traffic belongs to best effort service, the TPC selects the cell only on the basis of the resource availability table. If the incoming traffic belongs to guaranteed service, the TPC checks 1) if resource reservation has been performed, and 2) if not, how much bandwidth has to be reserved (based on the QMTC and THPT tables). By looking at the resource availability table, the TPC determines a suitable channel, but it requests the RCU to perform the actual channel reservation. In step SS12, the RCU makes a decision about resource reservation and sends the decision to the downlink interface unit DL_IU (in this example: a DVB interface unit). Steps SS14 and SS16 are the corresponding acknowledgements.

Steps SS18 and SS20 relate to paging the mobile node MN. If the MN is not active in the selected bearer or channel, it needs to be paged. In step SS18, the MN is paged via the uplink interface unit UL_IU (a GPRS interface unit in this example). Step SS20 is the paging response from the MN.

In step SS22, the first user data packet to the MN is forwarded to the downlink interface unit DL_IU. In step SS24, the DL_IU checks that the recipient's COA is authorized and the resource reservation is valid. In step SS26, the DL_IU forwards the first user data packet to the MN. In step SS28, the MN notices the incoming data packet from the CN and responds with a mobility binding of COA(MN) = COA(IU-MN). In other words, the COA is associated with the DL_IU. The subnetwork prefix is the same as with the DL_IU, and the second part of the address is the MIN. In step SS30, the CN updates the MN's mobility binding. In step SS32, the CN begins to send MN-terminated data packets directly to the DL_IU, thus bypassing the intervening elements (the HRU, the HA and the TPC). In reality, the CN may have sent more than one packet before receiving the MN's updated mobility binding in step SS28, in which case the TPC may have to route more than one packet to the MN.

In step SS34, if the same CN needs to open another session for the MN, and the new session requires best effort service (no resource reservation needed), the data of the new session is sent just like the data in step SS32 (the final step being shown by a dotted arrow). But if the new session requires guaranteed service (which in turn requires resource reservation), the first packet of the new session is routed from the DL_IU to the TPC, as shown in step SS36. In step SS38, the TPC performs resource reservation for the second session. This step comprises the detailed steps of SS10 to SS16. In step SS40, the first data packet of the second session is routed to the MN. In step SS42, subsequent packets of the second session are routed to the MN.

No explicit messages to end a session are needed. If there are no MN-terminated packets for a predefined time, the IU can simply delete the information related to the MN from its cache and inform the TPC about its action. The MN may maintain a similar timer. If it receives no packets before the timer expires, the MN stops monitoring the broadcast bearer for user data. If the MN is still expecting data when the timer is about to expire, the MN may request the IU to temporarily extend the time limit. The IU may accept or reject the request.

In order to save the battery of a portable mobile node, it is preferable that the mobile node only monitors one bearer type (network) at a time. For example, the subscriber data related to the mobile node can include a default bearer type, such as GSM or UMTS. The mobile node should be paged on this bearer. The mobile node can be ordered to monitor the selected bearer type by sending a modified page message which indicates the selected bearer type, channel, possible decryption data, etc. Alternatively, such information can be sent in a separate message, such as a data call or the like.

### DxB microcell architecture

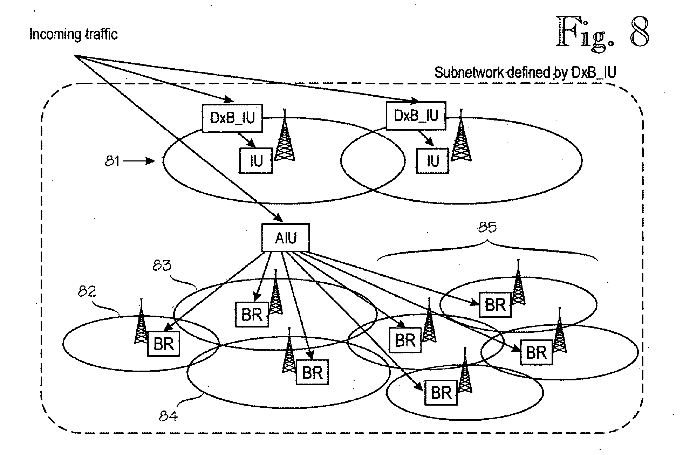

Figure 8 illustrates a cellular broadcast network. The cellular broadcast network concept has been introduced for data broadcasting in DxB networks. The concept introduces DxB microcells. In some areas, such as department stores, supermarkets and the like, a DxB network may comprise two overlapping cell structures. Such areas are covered by normal DxB cells 81, called macrocells, and by smaller cells 82 to 85, called microcells. The microcells provide content which is customized according to a particular site. To optimize network architecture for such a microcell site, a preferred embodiment of the invention introduces two new elements, namely an aggregate interface unit AIU and a broadcast router BR. Each broadcast router BR is coupled to a single microcell transmitter. It encapsulates lP data into protocols suitable for a DxB bearer. Several broadcast routers are connected to the MBN backbone via a single aggregate interface unit AIU. The AIU acts not only as a router for the BRs, but also as a centralized resource management unit. Employing the AIU and BR elements reduces key management load and signalling related to resource management.

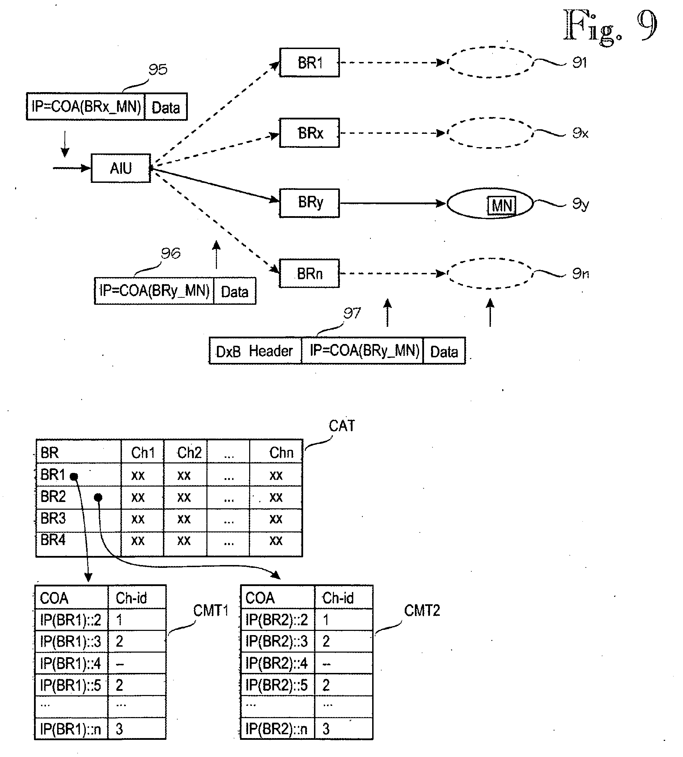

Figure 9 illustrates packet routing and the various data structures in a system as shown in Figure 8. The aggregate interface unit AIU comprises a channel allocation table CAT having a resource entry for each combination of a broadcast router BR and channel. The CAT table may indicate usage of the resources by some appropriate metric. The channel identifiers Ch1 to Chn may represent physical channels, such as several 8MHz channels in a DVB-T network. Each broadcast router BR1 to BRn comprises a channel mapping table CMT1, CMT2, etc. The channel mapping tables map the mobile node's care-of address COA to a channel identifier. Reference signs 91 to 9n denote the microcells under one AIU. x and y are two indices within the range of 1 to n. The mobile node MN in cell 9y. Reference sign 95 denotes a data packet arriving to the AIU. The data packet's header indicates the COA as COA(BRx_MN), which means the BRx subnetwork prefix plus the mobile node's MIN. The AIU's own IP address IP(AIU) is only used when the AIU needs to receive signalling packets from other units, such as the TPC, but this address is not used for routing data to the MN. The AIU uses the CAT table to convert the data packet 95 to a data packet 96 whose header indicates the COA of BRy, under which the MN is located. BRy uses its channel mapping table CMT to convert the data packet 96 to a data packet 97, which is an IP packet encapsulated in a DxB packet. In other words, the data packet 97 has a DxB header in addition to the IP header.

### Acronyms (some are not official):

ACAL: Available Care-of Address List
AIU: Aggregate Interface Unit
APL: Access Permission List
BB: Backbone Network
BG: Border Gateway
BN: Bearer Network
BR: Broadcast Router
CN: Correspondent Node
CAT/CMT: Channel Allocation/Mapping Table
COA: Care-Of Addresses
DL: Downlink
DxB: DAB or DVB
FW: Firewall
HA: Home Agent
HAN: Home Administration Node(s)
HRU: Home Register Unit
IP: Internet Protocol
IU: Interface Units
MAC: MBN Authentication Centre
MB: Mobility Binding
MBN: Multi-Bearer Network
MBN_TC: MBN Traffic Class
MHA: MBN Home Agent
MIN: MBN Interface Number
MMU: Mobility Management Unit
MN: Mobile Node
PDP: Packet Data Protocol
QMTC: QoS to MBN_TPC
QoS: Quality of Service
RMU: Resource Management Unit
SSN: Service Support Nodes
THPT: Traffic Handling Policy Table
TPC: Traffic Policy Controller
UL: Uplink

### Reference:

1. MEMO network documentation (collectively referred to as the "MEMO concept"), available at http://memo.lboro.ac.uk

## Claims

1. A service support node (SSN) for a backbone network (BB) of a multi-bearer network (MBN), **characterized in that** the service support node (SSN) is arranged to
- carry out centralized administration and distribution of traffic policies;
- carry out centralized mobility management for managing the mobility of a mobile node (MN) within each downlink bearer network (DxB);
- carry out centralized resource control for making resource reservation decisions within each downlink bearer network (DxB);
wherein the service support node (SSN) comprises a mobility management unit (MMU) arranged to carry out centralized mobility management of a mobile node (MN) within at least one downlink bearer network (DxB), the service support node (SSN) being arranged to
receive subscriber preference information related to the mobile node (MN);
maintain resource availability data and make resource reservation commands concerning said at least one downlink bearer network (DxB);
combine, in a centralized traffic policy controller (TPC) comprised in the service support node (SSN), traffic policy information, said subscriber preference information and said resource availability data into a routing table, and route one or a few initial data packets of a new session on the basis of said routing table, wherein an address associated with the centralized traffic policy controller (TPC) is stored as the mobile node's care-of address in its home agent (HA); and
transmit resource reservation decisions to at least one downlink interface unit (DxB_IU);
wherein, until a binding update is performed between the mobile node (MN) and a correspondent node (CN), the service support node (SSN) is arranged to
route one or a few initial data packets of a new session from the correspondent node (CN) via the home agent (HA) and the centralized traffic policy controller (TPC) to a bearer network interface unit (DxB_IU) serving the mobile node (MN).

2. A service support node (SSN) according to claim 1, **characterized in that** the routing table is arranged to map at least one IP address to a cell/channel combination within the at least one downlink bearer network (DxB).

3. An interface unit (IU) for interfacing a backbone network (BB) of a multi-bearer network (MBN), to a downlink bearer network-(DxB), **characterized in that** the interface unit (IU) is configured to
interface to and carry out resource reservation decisions in at least one downlink bearer network (DxB);
convey an initial access request from a mobile node (MN) to an access control node (MAC);
receive from a service support node (SSN) and carry out resource reservation decisions concerning the downlink bearer network (DxB);
route data packets to the mobile node (MN) according to mobile-node-specific traffic policies administered and distributed by the service support node (SSN), the traffic policy information being combined with subscriber preference information related to the mobile node (MN) and with resource availability data into a routing table in a centralized traffic policy controller (TPC) comprised in the service support node (SSN), wherein an address associated with the centralized traffic policy controller (TPC) is stored as the mobile node's care-of address in its home agent (HA);
wherein the interface unit (DxB_IU) comprises a resource management unit (RMU) coupled to the interface unit (DxB_IU), for carrying out resource reservation decisions, wherein the interface unit (IU) is a bearer interface unit (DxB_IU) configured to
receive an initial data packet routed on the basis of the routing table via the home agent (HA) and the centralized traffic policy controller (TPC) to the bearer network interface unit (DxB_IU) serving the mobile node (MN), wherein an address associated with the bearer network interface unit (DxB_IU) is stored as the mobile node's care-of address in a correspondent node (CN); and
receive, in response to a binding update performed between the mobile node (MN) and the correspondent node (CN), subsequent data packets routed directly from the correspondent node (CN) to the bearer network interface unit (DxB_IU) such that the subsequent data packets bypass the home agent (HA) and the centralized traffic policy controller (TPC).

4. An interface unit (IU) according to claim 3, **characterized in that** the interface unit (IU) is arranged to define an Internet protocol subnetwork comprising all cells under the interface unit (IU) in question.

5. An interface unit (IU) according to claim 3 or 4, **characterized in that** the interface unit (DxB_IU, AIU, BR) is arranged to support multiple geographically overlapping cell structures (81; 82 - 85) in a digital audio broadcast DAB and/or digital video broadcast DVB network.

6. A mobile node (MN), **characterized in that** the mobile node (MN) comprises a radio interface to multiple different bearer networks (BN), at least one bearer network being a broadcast network, the mobile node (MN) being arranged to
select subscriber preference information;
register with a backbone network (BB, MAC) controlling said multiple different bearer networks; and,
as a response to registration with the backbone network, update the mobile node's mobility binding via the backbone network, wherein an address associated with a selected centralized traffic policy controller (TPC) comprised in a servive support node (SSN) is stored as the mobile node's care-of address in its home agent (HA), the service support node (SSN) being arranged to administer and distribute mobile-node specific traffic policies for the routing of data packets;
receive an initial data packet routed on the basis of a routing table via the home agent (HA), the centralized traffic policy controller (TPC) and a bearer network interface unit (DxB_IU) serving the mobile node (MN), wherein traffic policy information, the subscriber preference information related to the mobile node (MN) and resource availability data are combined in the centralized traffic policy controller (TPC) into the routing table, and wherein an address associated with the bearer network interface unit (DxB_IU) is stored as the mobile node's care-of address in a correspondent node (CN);
perform a binding update between the mobile node (MN) and the correspondent node (CN) to thereby cause subsequent data packets to be routed directly from the correspondent node (CN) via the bearer network interface unit (DxB_IU) such that the subsequent data packets bypass the home agent (HA) and the centralized traffic policy controller (TPC); and
receive subsequent data packets routed directly from the correspondent node (CN) via the bearer network interface unit (DxB_IU), the subsequent data packets thus bypassing the home agent (HA) and the centralized traffic policy controller (TPC).

## Patentansprüche

1. Dienstenetzknoten (SSN) für ein Backbone-Netz (BB) eines Mehrträgernetzes (MBN), **dadurch gekennzeichnet, daß** der Dienstenetzknoten (SSN) angeordnet ist zum
- Ausführen zentraler Verwaltung und Verteilung von Verkehrsregeln;
- Ausführen zentraler Mobilitätsverwaltung zum Verwalten der Mobilität eines Mobilfunkknotens (MN) innerhalb jedes Abwärts-Trägernetzes (DxB);
- Ausführen zentraler Betriebsmittelsteuerung zum Treffen von Betriebsmittelbuchungsentscheidungen innerhalb jedes Abwärts-Trägernetzes (DxB);
wobei der Dienstenetzknoten (SSN) eine zum Ausführen zentraler Mobilitätsverwaltung eines Mobilfunkknotens (MN) innerhalb mindestens eines Abwärts-Trägernetzes (DxB) angeordnete Mobilitätsverwaltungseinheit (MMU) umfaßt, wobei der Dienstenetzknoten (SSN) angeordnet ist zum
Empfangen von Teilnehmerprioritätsinformationen bezüglich des Mobilfunkknotens (MN);
Unterhalten von Betriebsmittelverfügbarkeitsdaten und Erteilen von Betriebsmittelbuchungsbefehlen betreffs des mindestens einen Abwärts-Trägernetzes (DxB);
Kombinieren in einer in dem Dienstenetzknoten (SSN) enthaltenen zentralen Verkehrsregelsteuerung (TPC) von Verkehrsregelinformationen, besagten Teilnehmerprioritätsinformationen und besagten Betriebsmittelverfügbarkeitsdaten in einer Leitwegtabelle, und Leiten von einem oder einigen Anfangs-Datenpaketen einer neuen Sitzung nach der besagten Leitwegtabelle, wobei eine der zentralen Verkehrsregelsteuerung (TPC) zugewiesene Adresse als die Gastadresse des Mobilfunkknotens in seinem Heimatagenten (HA) gespeichert wird; und
Übertragen von Betriebsmittelbuchungsentscheidungen zu mindestens einer Abwärts-Schnittstelleneinheit (DxB_IU);
wobei bis zur Durchführung einer verbindlichen Aktualisierung zwischen dem Mobilfunkknoten (MN) und einem Korrespondenzknoten (CN) der Dienstenetzknoten (SSN) angeordnet ist zum
Leiten eines oder einiger Anfangsdatenpakete einer neuen Sitzung von dem Korrespondenzknoten (CN) über den Heimatagenten (HA) und die zentrale Verkehrsregelsteuerung (TPC) zu einer den Mobilfunkknoten (MN) bedienenden TrägerNetzschnittstelleneinheit (DxB_IU).

2. Dienstenetzknoten (SSN) nach Anspruch 1, **dadurch gekennzeichnet, daß** die Leitwegtabelle zum Abbilden mindestens einer IP-Adresse auf eine Zellen-/Kanalkombination innerhalb des mindestens einen Abwärts-Trägernetzes (DxB) angeordnet ist.

3. Schnittstelleneinheit (IU) zum Anschließen eines Backbone-Netzes (BB) eines Mehrträger-Netzes (MBN) an ein Abwärts-Trägernetz (DxB), **dadurch gekennzeichnet, daß** die Schnittstelleneinheit (IU) aufgebaut ist zum
Anschließen an und Ausführen von Betriebsmittelbuchungsentscheidungen in mindestens einem Abwärts-Trägernetz (DxB);
Übermitteln einer Anfangs-Zugriffsanforderung von einem Mobilfunkknoten (MN) an einen Zugriffssteuerungsknoten (MAC);
Empfangen von einem Dienstenetzknoten (SSN) und Ausführen von Betriebsmittelbuchungsentscheidungen betreffs des Abwärts-Trägernetzes (DxB);
Leiten von Datenpaketen zum Mobilfunkknoten (MN) nach mobilfunkknotenspezifischen Verkehrsregeln; verwaltet und verteilt durch den Dienstenetzknoten (SSN), wobei die Verkehrsregelinformationen mit Teilnehmerprioritätsinformationen bezüglich des Mobilfunkknotens (MN) und mit Betriebsmittelverfügbarkeitsdaten in einer Leitwegtabelle in einer in dem Dienstenetzknoten (SSN) enthaltenen zentralen Verkehrsregelsteuerung (TPC) kombiniert werden, wobei eine der zentralen Verkehrsregelsteuerung (TPC) zugewiesene Adresse als die Gastadresse des Mobilfunkknotens in seinem Heimatagenten (HA) gespeichert wird;
wobei die Schnittstelleneinheit (DxB_IU) eine an die Schnittstelleneinheit (DxB_IU) angekoppelte Betriebsmittelverwaltungseinheit (RMU) zum Ausführen von Betriebsmittelbuchungsentscheidungen umfaßt, wobei die Schnittstelleneinheit (IU) eine Trägerschnittstelleneinheit (DxB_IU) ist, aufgebaut zum
Empfangen eines über den Heimatagenten (HA) und die zentrale Verkehrsregelsteuerung (TPC) nach der Leitwegtabelle zu der den Mobilfunkknoten (MN) bedienenden Trägernetzschnittstelleneinheit (DxB_IU) geleiteten Anfangs-Datenpakets, wobei eine der Trägernetzschnittstelleneinheit (DxB_IU) zugewiesene Adresse als die Gastadresse des Mobilfunkknotens in einem Korrespondenzknoten (CN) gespeichert wird; und
Empfangen als Reaktion auf eine zwischen dem Mobilfunkknoten (MN) und dem Korrespondenzknoten (CN) durchgeführte verbindliche Aktualisierung von direkt vom Korrespondenzknoten (CN) zu der Trägernetzschnittstelleneinheit (DxB_IU) geleiteten nachfolgenden Datenpaketen, so daß die nachfolgenden Datenpakete den Heimatagenten (HA) und die zentrale Verkehrsregelsteuerung (TPC) umgehen.

4. Schnittstelleneinheit (IU) nach Anspruch 3, **dadurch gekennzeichnet, daß** die Schnittstelleneinheit (IU) zum Definieren eines alle Zellen unter der in Frage kommenden Schnittstelleneinheit (IU) umfassenden Internetprotokollteilnetzes angeordnet ist.

5. Schnittstelleneinheit (IU) nach Anspruch 3 oder 4, **dadurch gekennzeichnet, daß** die Schnittstelleneinheit (DxB_IU, AIU, BR) zum Unterstützen von mehrfachen geographischen überlappenden Zellenstrukturen (81; 82-85) in einem digitalen Tonfunknetz DAB und/oder digitalen Fernsehnetz DVB angeordnet ist.

6. Mobilfunkknoten (MN), **dadurch gekennzeichnet, daß** der Mobilfunkknoten (MN) eine Funkschnittstelle zu mehrfachen unterschiedlichen Trägernetzen (BN) umfaßt, wobei mindestens ein Trägernetz ein Rundsendenetz ist, wobei der Mobilfunkknoten (MN) angeordnet ist zum
Auswählen von Teilnehmerprioritätsinformationen;
Anmelden bei einem die mehrfachen unterschiedlichen Trägernetze steuernden Backbone-Netz (BB, MAC); und
als Reaktion auf die Anmeldung bei dem Backbone-Netz Aktualisieren der Mobilitätsanbindung des Mobilfunkknotens über das Backbone-Netz, wobei eine einer ausgewählten, in einem Dienstenetzknoten (SSN) enthaltenen zentralen Verkehrsregelsteuerung (TPC) zugewiesene Adresse als die Gastadresse des Mobilfunkknotens in seinem Heimatagenten (HA) gespeichert wird, wobei der Dienstenetzknoten (SSN) zum Verwalten und Verteilen von mobilfunkknotenspezifischen Verkehrsregeln für die Wegelenkung von Datenpaketen angeordnet ist;
Empfangen eines über den Heimatagenten (HA), die zentrale Verkehrsregelsteuerung (TPC) und eine den Mobilfunkknoten (MN) bedienende Trägernetzschnittstelleneinheit (DxB_IU) nach einer Leitwegtabelle geleiteten Anfangs-Datenpakets, wobei Verkehrsregelinformationen, die Teilnehmerprioritätsinformationen bezüglich des Mobilfunkknotens (MN) und Betriebsmittelverfügbarkeitsdaten in der zentralen Verkehrsregelsteuerung (TPC) in die Leitwegtabelle kombiniert werden, und wobei eine der Trägernetzschnittstelleneinheit (DxB_IU) zugewiesene Adresse als die Gastadresse des Mobilfunkknotens in einem Korrespondenzknoten (CN) gespeichert wird;
Durchführen einer verbindlichen Aktualisierung zwischen dem Mobilfunkknoten (MN) und dem Korrespondenzknoten (CN); um **dadurch** zu veranlassen, daß nachfolgende Datenpakete direkt von dem Korrespondenzknoten (CN) über die Trägernetzschnittstelleneinheit (DxB_IU) geleitet werden, so daß die nachfolgenden Datenpakete den Heimatagenten (HA) und die zentrale Verkehrsregelsteuerung (TPC) umgehen; und
Empfangen nachfolgender, direkt von dem Korrespondenzknoten (CN) über die Trägernetzschnittstelleneinheit (DxB_IU) geleiteter Datenpakete, wobei die nachfolgenden Datenpakete **dadurch** den Heimatagenten (HA) und die zentrale Verkehrsregelsteuerung (TPC) umgehen.

## Revendications

1. Noeud de support de service (SSN) pour un réseau dorsal (BB) d'un réseau à supports multiples (MBN), **caractérisé en ce que** le noeud de support de service (SSN) est agencé de façon à :
- effectuer une administration et une distribution centralisées de politiques de trafic ;
- effectuer une gestion de mobilité centralisée pour gérer la mobilité d'un noeud mobile (MN) au sein de chaque réseau support en liaison descendante (DxB) ;
- effectuer un contrôle de ressources centralisé pour prendre des décisions de réservation de ressources au sein de chaque réseau support en liaison descendante (DxB) ;
dans lequel le noeud de support de service (SSN) comprend une unité de gestion de mobilité (MMU) agencée de façon à effectuer une gestion de mobilité centralisée d'un noeud mobile (MN) au sein d'au moins un réseau support en liaison descendante (DxB), le noeud de support de service (SSN) étant agencé de façon à
recevoir des informations de préférences d'abonné se rapportant au noeud mobile (MN) ;
maintenir des données de disponibilité de ressources et exécuter des commandes de réservation de ressources concernant ledit au moins un réseau support en liaison descendante (DxB) ;
combiner, dans un contrôleur de politiques de trafic (TPC) centralisé compris dans le noeud de support de service (SSN), des informations de politique de trafic, lesdites informations de préférences d'abonné et lesdites données de disponibilité de ressources en une table d'acheminement, et acheminer un ou quelques paquet(s) initial(aux) de données d'une nouvelle session sur la base de ladite table d'acheminement, dans lequel une adresse associée avec le contrôleur de politiques de trafic (TPC) centralisé est mémorisée comme l'adresse c/o du noeud mobile dans son agent résidentiel (HA) ; et
transmettre des décisions de réservation de ressources à au moins une unité d'interface de liaison descendante (DxB_IU) ;
dans lequel, jusqu'à ce qu'une mise à jour de liaison soit effectuée entre le noeud mobile (MN) et un noeud correspondant (CN), le noeud de support de service (SSN) est agencé de façon à
acheminer un ou quelques paquet(s) initial (aux) de données d'une nouvelle session à partir du noeud correspondant (CN) par l'intermédiaire de l'agent résidentiel (HA) et du contrôleur de politiques de trafic (TPC) centralisé jusqu'à une unité d'interface de réseau support (DxB_IU) desservant le noeud mobile (MN).

2. Noeud de support de service (SSN) selon la revendication 1, **caractérisé en ce que** la table d'acheminement est agencée de façon à mettre en correspondance au moins une adresse IP avec une combinaison cellule/canal au sein de l'au moins un réseau support en liaison descendante (DxB).

3. Unité d'interface (IU) pour mettre en interface un réseau dorsal (BB) d'un réseau à supports multiples (MBN) avec un réseau support en liaison descendante (DxB), **caractérisée en ce que** l'unité d'interface (IU) est configurée pour
être en interface avec et prendre des décisions de réservation de ressources au sein d'au moins un réseau support en liaison descendante (DxB) ;
transporter une demande d'accès initiale d'un noeud mobile (MN) jusqu'à un noeud de contrôle d'accès (MAC) ;
recevoir d'un noeud de support de service (SSN) et prendre des décisions de réservation de ressources concernant le réseau support en liaison descendante (DxB) ;
acheminer des paquets de données jusqu'au noeud mobile (MN) en fonction de politiques de trafic spécifiques au noeud mobile administrées et distribuées par le noeud de support de service (SSN), les informations de politique de trafic étant combinées avec des informations de préférences d'abonné se rapportant au noeud mobile (MN) et avec des données de disponibilité de ressources en une table d'acheminement dans un contrôleur de politiques de trafic (TPC) centralisé compris dans le noeud de support de service (SSN), dans laquelle une adresse associée avec le contrôleur de politiques de trafic (TPC) centralisé est mémorisée comme l'adresse c/o du noeud mobile dans son agent résidentiel (HA) ;
dans laquelle l'unité d'interface (DxB_IU) comprend une unité de gestion de ressources (RMU) couplée à l'unité d'interface (DxB_IU) pour prendre des décisions de réservation de ressources, dans laquelle l'unité d'interface (IU) est une unité d'interface de support (DxB_IU) configurée pour
recevoir un paquet initial de données acheminé sur la base de la table d'acheminement par l'intermédiaire de l'agent résidentiel (HA) et du contrôleur de politiques de trafic (TPC) centralisé jusqu'à l'unité d'interface de réseau support (DxB_IU) desservant le noeud mobile (MN), dans laquelle une adresse associée avec l'unité d'interface de réseau support (DxB_IU) est mémorisée comme l'adresse c/o du noeud mobile dans un noeud correspondant (CN) ; et
recevoir, en réponse à une mise à jour de liaison effectuée entre le noeud mobile (MN) et le noeud correspondant (CN), des paquets subséquents de données acheminés directement du noeud correspondant (CN) jusqu'à l'unité d'interface de réseau support (DxB_IU), de telle sorte que les paquets subséquents de données contournent l'agent résidentiel (HA) et le contrôleur de politiques de trafic (TPC) centralisé.

4. Unité d'interface (IU) selon la revendication 3, **caractérisée en ce que** l'unité d'interface (IU) est agencée de façon à définir un sous-réseau de protocole Internet comprenant toutes les cellules sous l'unité d'interface (IU) en question.

5. Unité d'interface (IU) selon la revendication 3 ou 4, **caractérisée en ce que** l'unité d'interface (DxB_IU, AIU, BR) est agencée de façon à supporter des structures de cellules multiples se chevauchant géographiquement (81 ; 82 - 85) dans un réseau de diffusion audio numérique DAB et/ou de diffusion vidéo numérique DVB.

6. Noeud mobile (MN), **caractérisé en ce que** le noeud mobile (MN) comprend une interface radio avec des réseaux support (BN) multiples différents, au moins un réseau support étant un réseau de diffusion, le noeud mobile (MN) étant agencé de façon à
sélectionner des informations de préférences d'abonné ;
s'enregistrer avec un réseau dorsal (BB, MAC) contrôlant lesdits réseaux support multiples différents ; et
en réponse à l'enregistrement avec le réseau dorsal, mettre à jour la liaison en mobilité du noeud mobile par l'intermédiaire du réseau dorsal, dans lequel une adresse associée avec un contrôleur de politiques de trafic (TPC) centralisé sélectionné compris dans un noeud de support de service (SSN) est mémorisée comme l'adresse c/o du noeud mobile dans son agent résidentiel (HA), le noeud de support de service (SSN) étant agencé de façon à administrer et distribuer des politiques de trafic spécifiques au noeud mobile pour l'acheminement de paquets de données ;
recevoir un paquet initial de données acheminé sur la base de la table d'acheminement par l'intermédiaire de l'agent résidentiel (HA), du contrôleur de politiques de trafic (TPC) centralisé et d'une unité d'interface de réseau support (DxB_IU) desservant le noeud mobile (MN), dans lequel des informations de politique de trafic, les informations de préférences d'abonné se rapportant au noeud mobile (MN) et des données de disponibilité de ressources sont combinées dans le contrôleur de politiques de trafic (TPC) centralisé en la table d'acheminement, et dans lequel une adresse associée avec l'unité d'interface de réseau support (DxB_IU) est mémorisée comme l'adresse c/o du noeud mobile dans un noeud correspondant (CN) ;
effectuer une mise à jour de liaison entre le noeud mobile (MN) et le noeud correspondant (CN) pour ainsi faire en sorte que des paquets subséquents de données soient acheminés directement du noeud correspondant (CN) par l'intermédiaire de l'unité d'interface de réseau support (DxB_IU) de telle sorte que les paquets subséquents de données contournent l'agent résidentiel (HA) et le contrôleur de politiques de trafic (TPC) centralisé ; et
recevoir des paquets subséquents de données acheminés directement du noeud correspondant (CN) par l'intermédiaire de l'unité d'interface de réseau support (DxB_IU), les paquets subséquents de données contournant ainsi l'agent résidentiel (HA) et le contrôleur de politiques de trafic (TPC) centralisé.
